# EUROPÄISCHE PATENTSCHRIFT

(11) **EP 0 442 907 B1**
(45) Veröffentlichungstag und Bekanntmachung des Hinweises auf die Patenterteilung: **21.07.1993**
(21) Anmeldenummer: 89911994.5
(22) Anmeldetag: 20.10.1989
(51) Int. Cl.: B60T 1/06, B60K 17/04

(54) **RADKOPF FÜR IN ÖL LAUFENDE SCHEIBENBREMSEN**
WHEEL HEAD FOR OIL-LUBRICATED DISK BRAKES
MOYEU POUR FREINS A DISQUES A HUILE

(30) Priorität: 12.11.1988 DE 3838443
(43) Veröffentlichungstag der Anmeldung: 28.08.1991
(73) Patentinhaber: ZF FRIEDRICHSHAFEN Aktiengesellschaft, 88038 Friedrichshafen (DE)
(72) Erfinder: HAUPT, Josef, D-7991 Oberteuringen (DE); GAZYAKAN, Ünal, D-7990 Friedrichshafen (DE)
(86) Internationale Anmeldenummer: EP8901254
(87) Internationale Veröffentlichungsnummer: WO9005079

(56) Entgegenhaltungen:
- DE-A- 3 013 431
- US-A- 1 316 057
- US-A- 1 922 962
- US-A- 3 115 204
- US-A- 4 207 968
- US-A- 4 646 880

## Beschreibung

Die Erfindung betrifft einen Radkopf für in Öl laufende Scheibenbremsen nach dem Oberbegriff des Anspruches 1.

Unter Radköpfen dieser Gattung versteht man den gesamten Außenteil einer Fahrzeugachse im Radbereich, und zwar bei starren, ungelenkten Achsen vom inneren Nabenrand und bei gelenkten Achsen von der Lenkzapfenhalterung der radseitig angelenkten Gabel jeweils bis zur äußeren Frontplatte der Nabe einschließlich des Felgenbefestigungsflansches und aller Einbauten innerhalb der Nabe. Als Radkopf wird der das Radlager bzw. die Nabe tragende Achsgehäusebereich einschließlich des bei angetriebenen Achsen darin gelegenen Achswellenendes auch dann bezeichnet, wenn ein starres Achsgehäuse ohne Flanschverbindung ungeteilt bis in die Nabe hineinreicht.

Bezüglich der Gestaltung von Radköpfen mit Bremsen gilt es, neben den Maßnahmen aufgrund gewichts- und antriebsleistungs-bedingter Festigkeitsanforderungen insbesondere noch Vorkehrungen zu treffen, um eine genügend kurze axiale Baulänge zu erreichen. Aus Unfall- und Beschädigungsschutzgründen soll eine möglichst vollständige axiale Überdeckung des Radkopfes durch die Reifen- bzw. Felgenbreite möglich sein. Hinzu kommen Maßnahmen zur Sicherung hoher Standzeiten der Brems-Reibflächen, wie z. B. die Anordnung der Reibflächen innerhalb ölgefüllter Gehäusebereiche.

Bei gelenkten Radköpfen wird meistens noch ein enger Wendekreisdurchmesser gefordert, wozu ein kurzer Abstand von Radmitte bis zum Schnittpunkt der Schwenkachse mit der Hauptdrehachse angestrebt wird.

Einen diesen Grundbedingungen entsprechenden lenkbaren angetriebenen Radkopf zeigt die US 1.316.057.

Danach ist ein über den frontseitigen Endflansch der Achswelle direkt angetriebenes, teilweise mit Öl gefülltes Nabengehäuse auf einem Radlager dichtend abgestützt. Das äußere Radlager liegt über dem radseitigen Ende des Achsgehäuses. Ein radial zwischen zwei drehfeste aber zueinander axial bewegliche Bremsdruckscheiben hineinragender Radialsteg trägt die Reibflächen, gegen die die Bremsdruckscheiben betätigbar sind.

Der Achswelle ist ein Planetengetriebe nachgeordnet, dessen das Rad antreibendes Hohlrad als Innenlamellenträger einer Scheibenbremse ausgestaltet ist. Dabei sind die nicht drehbaren Bremsscheiben mittels eines aus dem Achsgehäuse herausschiebbaren Rohres bzw. eines an dessen bremsenseitigem Ende angeformten Druckflansches gegen einen drehfesten Innenkragen des Achsgehäusesteges anpreßbar. Die Bremswirkung ist dabei relativ schwach, weil nur die untersetzte Drehzahldifferenz zwischen Hohlrad und Achsgehäuse wirkt.

Das Getriebe liegt dabei ungünstig langbauend axial zwischen den Hälften des Radlagers, und die Bremse ist nur inspizierbar nach Demontage eines sie außen umfassenden mehrteiligen Radnabengehäuses, von dem das Hohlrad getragen wird. Diese Anordnung behindert eine direkte großflächige Wärmeabfuhr aus der Bremse und erlaubt trotz axialer Überdeckung von Bremse und Getriebe keine echte Kurzbauweise. Weiter ist nachteilig, daß sich dabei Bremsabrieb ins Getriebe und zumindestens das vordere Lager verteilen kann und dort Schäden verursachen dürfte, weil die Bremse im gleichen Raum wie das Getriebe und die Lager liegt.

Die DE 30 13 431 zeigt zwar eine wegen Ausnutzung der höchstmöglichen Drehzahldifferenz sowohl leistungsfähigere als auch getrennte Ölräume für Bremse und Getriebe bietende und noch relativ gut zugängliche Bremse. Sie ist aber frontseitig dem Radlager vorgeordnet und daher von diesem gegebenenfalls samt Getriebe relativ einfach abbaubar. Bei dieser auch für lenkbare Radköpfe geeigneten Ausgestaltung ist allerdings immer noch die axiale Zusatzbaulänge durch die Bremse als auch die Behinderung der Wärmeabfuhr von der Bremse an die Umgebungsluft ungünstig, weil die Endscheiben der Bremse nicht mit dem Außengehäuse direkt verbunden sind, so daß sich die Bremswärme in der Bremsennachbarschaft, also auch an Getriebeteilen stauen und nicht rasch genug an die Umgebungsluft abgegeben werden kann. Überdies wird keine Möglichkeit zur Verwendung von bis zum Felgen-Innendurchmesser vergrößerten Bremsen geschaffen.

Die US 4.207.968 zeigt gleichfalls keine für schmale Radköpfe geeignete Bauweise, weil bei ihr die Bremsen nicht zwischen den Stirnrändern des Radnabengehäuses, sondern gleichfalls axial davor angeordnet sind. Die Bremsen können dabei keinen größeren Durchmesser erhalten als das Getriebe, und eine Druckölleitung muß von außen her angeschlossen werden.

Bei allen in Betracht gezogenen Radköpfen ist es auch nicht möglich, ohne Änderung des Lenkrollradius ein Reduziergetriebe wahlweise einzusetzen, und es ist nicht möglich, eine gleiche Kurzbauweise zu ermöglichen, unabhängig, ob mit oder ohne Getriebe.

Bei an sich ungebremster Fahrt wirken sich Schleppverluste durch Schmierölfilm etc. zwischen den Bremsscheiben besonders ungünstig aus. Infolge der hohen Drehzahlen der Achswelle im Gehäuseinneren verwirbeltes Schmieröl wird hier zwar rasch durch die Reibscheibenzwischenräume nach außen gegen den Gehäusemantel befördert. Jedoch kann dadurch der in Gehäusemitte verfügbare Ölanteil schneller aufgebraucht sein als für eine intensive Kühlung günstig wäre, wenn keine Zwangsumlaufschmierung ähnlich dem zitierten Stand der Technik erfolgt, so daß stets neues Frischöl in den Gehäusekern gelangt. Bei lediglich tauchgeschmiertem Radkopf dieser Bauart wäre rasch keine ausreichende Kühlung der Bremsflächen mehr gegeben, wenn eine intensive Bremsung notwendig ist. Bei ungenügend gekühlten Bremsflächen werden die Lager und Zahnräder in solchen Radköpfen auch aufgrund von erwärmungsbedingten Maßveränderungen gefährdet. Insbesondere bei längeren Dauerbremsungen und schweren Fahrzeugen erweisen sich die Oberflächen solch kleiner Radköpfe als nicht mehr groß genug für eine ausreichende Wärmeabfuhr durch die Gehäusewand hindurch, weil sich dann noch die Abwärme aus Reduziergetrieben im Radkopf mit auswirkt. In diesem Zusammenhang ist es auch ungünstig, daß bei der radialen Begrenzung der Bremsscheibendurchmesser auf den lichten Durchmesser des Hohlrades relativ hohe spezifische Flächendrücke gegen die Bremsflächen nötig sind. Wärmedehnungen und daraus folgende Verklemmungen und höhere Reibungverluste bzw. evtl. sogar Blockierungen auch nach dem Lüften der Bremse lassen sich dann nicht völlig ausschließen, weil dort weder die Bremse noch der Kolben axial unmittelbar mit einem größeren Bereich der Gehäusewand in Berührung steht und deshalb die Wärme in Rädern, Wellen, Lagern etc. gestaut werden kann. Zu Deformationen, beispielsweise des Hohlrades oder Hohlradträgers, kann es auch infolge des Bremskolbendruckes kommen. Und zwar können das Hohlrad unrund bzw. der Lauf der Planetenräder gebremst und Zahnschäden ausgelöst werden, weil aus dem Bremsdruckkolben Reaktionskräfte auf die Geometrie des Planetengetriebes gelangen, die bei starker Erwärmung noch zusätzlich erhöht werden.

Die Aufgabe der Erfindung wird, ausgehend von der US 1.316.057, darin gesehen, einen Radkopf für in Öl laufende Scheibenbremsen zu schaffen, bei welchem die Bremse besonders leistungsfähig und auch ohne Umwälzschmierung aus einem Kühlsystem gut kühlbar ist und im Vergleich zum bremsenlosen Antrieb keine zusätzliche axiale Abstandsvergrößerung zwischen Schwenkachsenschnittpunkt zur Drehachse und Radmitte erfordert, sondern bei einem bremsenlosen Radkopf eine Bremse auf einfache Weise ohne Änderung der Radkopfbreite fakultativ nachrüstbar bzw. weglaßbar ist.

Die Lösung wird mit den kennzeichnenden Merkmalen des Anspruchs 1 dadurch erreicht, daß die Bremse nicht nur im bisher ohnehin nicht genutzten Freiraum zwischen Radlager und Felgenkranz radial außerhalb des bei Notwendigkpit eines Radgetriebes erforderlichen Raumes zwischen entsprechend großen Stirnflächen so angeordnet wird, daß sich die Bremsenkräfte an diesen Stirnflächen bei direkter Wärmeübertragung so abstützen, daß sich die Kolbenkräfte über den Gehäusemantel gegenseitig aufheben, sondern daß sie außerdem auch direkt hydraulisch betätigbar ist. Mittels der Stirnflächen wird gegenüber üblichen Radköpfen eine erhebliche Oberflächenerweiterung bei günstiger Fahrtwindkühlung und niedrigen spezifischen Bremsflächenbelastungen ohne axiale Baulängenvergrößerung des Gehäuses gegenüber bremsenloser Ausführung erreicht. Die Baulänge bleibt nun, unabhängig ob mit oder ohne Getriebe ausgeführt, der einer bremsenlosen Kurzbauweise gleich und die Möglichkeit, ohne Zwangsumlaufkühlung auskommen zu können, ist erheblich verbessert. Durch die Identität der Baulängen für Radköpfe mit unterschiedlicher Ausrüstung kann auch die Achsaufhängung und evtl. Lenkungsausstattung stets gleichartig ausgeführt werden.

Vorteilhafte Weiterbildungen der Erfindung sind in den Unteransprüchen beschrieben.
- Wird zur Betätigung der beiden Bremskolben ein gemeinsamer Bremsdruckringzylinder vorgesehen, der radial innerhalb eines nur von dem Kolben radial gehalterten Zylinderringes angeordnet ist, wird eine besonders kompakte und symmetrisch wirkende Bremse geschaffen.
- Bei Anflanschung des Radialsteges, der die Bremskolben führt und am Außenumfang mit Innenlamellenträgern der Bremse versehen ist, gegen die Stirnseite des Achsgehäuses kann die Bremsdruckleitung ohne relativbewegte Dichtflächen zuverlässig und ohne axialen Platzbedarf mit abgedichtet werden.
- Durch Anbringung von Innenlamellenträgern beidseits des Radialsteges, z. B. etwa radial über den Lagerhälften, wird der Außenumfang des Radialsteges frei zur Nutzung als Innenwandfläche des Bremsdruck-Ringkolbens.
- Wählt man die Durchmesser der Stirnflansche so groß, daß sie über den Außendurchmesser der Innenlamellenträger um mehr als die radiale Höhe der Ringflächen hinausgehen, ergeben sich günstige Einbau- und Kühlflächen-Verhältnisse.
- Versieht man die Achswelle an ihrem aus dem Achsgehäuse in das Radnabengehäuse eintauchenden freien Ende mit einer lösbaren Mitnahmeverbindung zur an ihrem Außenrand als frontseitiger Stirnflansch gestalteten Frontplatte, so ist die Verwendung des Radnabengehäuses mit in Öl laufenden Bremsscheiben auch ohne Zwischenschaltung eines Reduziergetriebes möglich.
- Gestaltet man jedoch einen die innere Lauffläche der Bremskolben tragenden Radialbund auf dem Achsrohr als radial vergrößerten Radialsteg aus, den man dann als Hohlradträger für ein Hohlrad eines von der Achswelle als Sonnenwelle getriebenen Planetenradsatzes nutzt, so kann bei unverändert kurzer Baulänge des Radkopfes darin ein leistungsfähiges und dennoch leicht zugängliches Planetengetriebe eingebaut sein, bei dem das Hohlrad außen zumindestens von den frontseitigen Bremsscheiben umfaßt ist.
- Durch eine Abstützung der Innenbremsscheiben der beiden Bremshälften auf Außenverzahnungen des Hohlrades beidseits einer stegartigen radialen Hohlradträgererweiterung, die die Bremskolben führt, und die Abstützung der Außenbremsscheiben der Bremshälften in Innenverzahnungen am Mantel des Radgetriebegehäuses jeweils im Bereich der Stirnseiten wird ebenfalls die Gefahr einer unzulässigen Erwärmung oder Verspannung reduziert.
- Werden die ringflächenförmigen radialen Stirnflansche mit Hilfe oberflächenvergrößernder Rippen etc. für besonders guten Wärmeaustausch gestaltet, lassen sich ungünstige Wärmestau-Einflüsse im Getriebebereich noch leichter vermeiden.
- Wenn der frontseitige ringflächenförmige Stirnflansch zur Befestigung des Felgenflansches mit Stehbolzen und einer entsprechenden Anlagefläche doppelt genutzt ist, wird sogar ein gewisser Wärmeabfluß in den Felgenflansch gelingen und steht auch bei relativ kleinen Raddurchmessern noch genügend Raum für die radiale Gehäuseerweiterung zur Verfügung.
- Bei Anbringung von Bremskolben-Rückzugfedern am Außenumfang von im Hohlrad geführten Bremsdruckscheiben lassen sich die Federn günstiger montieren und erlauben die Verwendung relativ kleiner Ringkolbenhöhen bzw. tragen zur Verringerung des Bremszylindervolumens und damit zur rascheren und energiewirtschaftlicheren Bremsbereitschaft bei.
- Indem eine Flanschverbindung zwischen dem Mantel des Radgetriebegehäuses und dem sich auf das Achsgehäuse über das Axiallager abstützenden achsgehäuseseitigen Stirnflansch vorgesehen ist, wird eine schnelle Kontrollierbarkeit der Bremsen und leichte Austauschbarkeit des Planetenrädersatzes erreicht.
- Mit Hilfe von auf dem Umfang der Außenverzahnungen des Hohlrades verteilt angeordneten Öldurchtrittsöffnungen in radialer Richtung wird sichergestellt, daß die durch die feststehenden Innenlamellen aus dem im Mantel des Radgetriebegehäuses beim Fahren sich bildenden Ölring abgeschöpften Teilmengen an Schmieröl in den mittleren Bereich des Radgetriebegehäuses zu den Plantenrädern und zum Axiallager gelangen können.
- Indem zwischen dem Hohlrad und den Innenflächen der Stirnflansche Dichtungen vorgesehen sind, wird es auch möglich, die Schmierung des Getriebes, z. B. mittels eines dickflüssigeren Schmiermittels vorzunehmen und im Bereich der Bremskühlflüssigkeit eine dünnflüssigere Sorte mit weniger Schleppverlustwirkung einzusetzen. Bremsabrieb wird hierdurch auch vom Getriebe ferngehalten.
- Durch etwa radial fluchtende Anordnung der achsgehäuseseitigen Gehäuseerweiterung über dem das Radgetriebegehäuse auf dem Achsgehäuse führenden Axiallager werden ungünstige Biegespannungen im Radgetriebegehäuse bzw. dessen Stirnseiten vermieden.
- Dadurch, daß die axiale Baulänge und die Verbindungsabmessungen des Achsgehäuses und der Achswelle sowie der hohen Befestigung des Hohlradträgers auf dem Achsgehäuse und der Abmessungen des Planetenradsatzes baugleich mit den entsprechenden Abmessungen an bremsenlosen Radgetriebegehäusen ausführbar sind, können sehr viele baugleiche Teile für unterschiedliche Radantriebe und einfache Nachrüstungsmöglichkeiten geschaffen werden.
- Dank der axial extrem kurz bauenden Radgetriebegehäuse sowohl für Ausführung mit als auch ohne Bremse ergeben sich auch kurze Abstände zwischen der Schwenkachse des Gelenkgabelkopfes und der Radmittenebene und damit kleine Lenkrollradien, welche enge Wendekreise ermöglichen. Die kurze Sonnenradwelle eignet sich zudem vorteilhaft auch für einstückige Ausführungen.
- Bei lenkbaren Radköpfen kann es zwecks Kurzbauweise und Montierbarkeit vorteilhaft sein, von der Gelenkseite der Achsgehäuseseite her eine Nabenhülse auf die Achswelle formschlüssig aufzuschieben, an deren radabgewandtem Ende ein Wellengelenk-Gabelkopf angeformt ist.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Die Erfindung wird im folgenden anhand schematischer Zeichnungen näher erläutert.
- Fig. 1: ist ein Querschnitt durch den um eine lediglich tauchgeschmierte Scheibenbremse radial erweiterten Radkopf mit einem Reduziergetriebe zwischen Achswelle und Nabenflansch.
- Fig. 2: ist ein Schnitt durch einen axial gleich langen und mit Getriebe versehenen Radkopf, jedoch ohne Bremse, bei welchem indessen die Lagerungs- und Getriebe-Abmessungen mit Ausnahme des Mantels und Hohlradträgers baugleich mit denjenigen ausgeführt wurden, wie man sie braucht, nur wahlweise gemäß Fig. 1 eine Bremse am Außenumfang des Gehäuses nachträglich anzubauen.
- Fig. 3: ist ein Schnitt durch einen Radkopf ohne Getriebe mit gleichfalls gegen Stirnflansche beidseitig abgestemmter nasser Bremse.

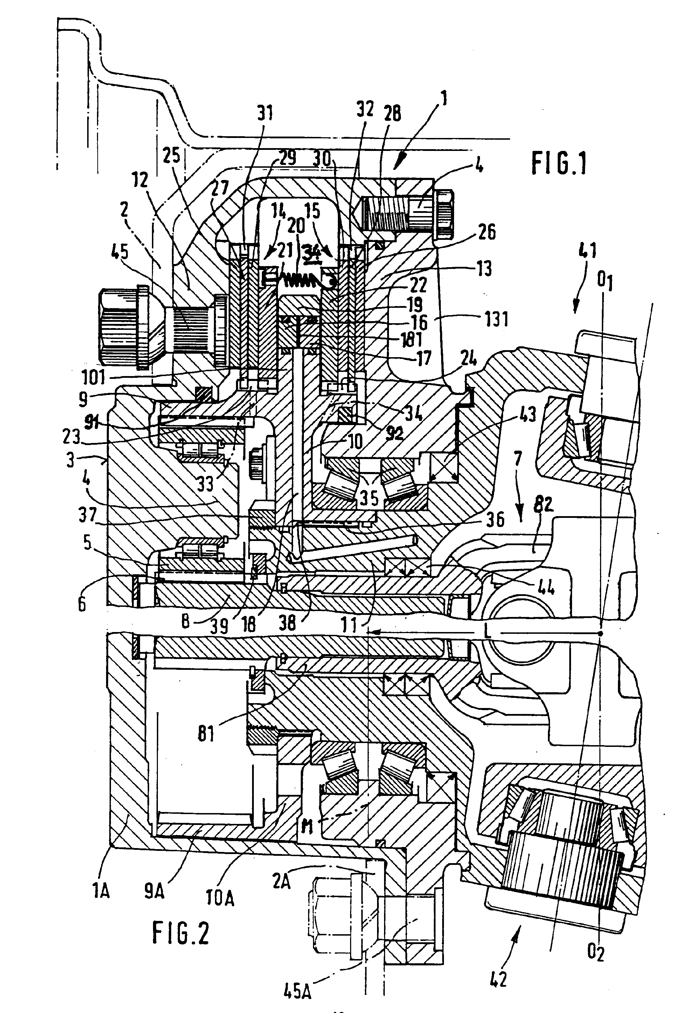

In Fig. 1 ist ein Radnabengehäuse 1 eines Rades, über dessen Felgenflansch 2 antreibbar über ein auf der Innenseite der Frontfläche 3 des Radnabengehäuses 1 vorgesehenes Planetengetriebe, dessen Planetenbolzen 4, auf der Innenseite der Frontfläche 3 liegen und auf welchen ein Planetenrädersatz 5 umläuft. Zu diesem gehört eine Formschlußverbindung 6 mit der Achswelle als Sonnenrad, welche am frontseitigen Ende einer vom außerhalb des Radnabengehäuses 1 angeordneten Achsgelenk 7 ausgehenden Achswelle 8 liegt und ein Hohlrad 9, mit welchem die Planetenräder 5 innen kämmen. Es ist durch einen scheibenförmigen Hohlradträger 10 knapp vor den frei in das Getriebeinnere vorkragenden Enden der Planetenbolzen 4 auf einem im Getriebeinneren endenden Achsgehäuse 11 festgehalten. Das Radnabengehäuse 1 ist durch über den Außendurchmesser des Hohlrades 9 radial erheblich hinausgehende Stirnflansche frontseitig 12 und achsgehäuseseitig 13 axial begrenzt, gegen deren Innenseiten sich je eine Bremsenhälfte 14, 15 unmittelbar anlehnt, wenn ein zwischen diesen angeordnetes ringförmiges Bremskolbenpaar 16, 17 unter dem Druckmitteldruck aus einer Bremsleitung 18 im Hohlradträger 10 bzw. dessen bis etwa Bremsmitte hochgezogener radialer Erweiterung 101 sich in entgegengesetzten Richtungen auseinanderspreizt. Ein dieses Bremskolbenpaar 16, 17 außen dichtend umschließender Zylinderring 19 hat dabei gleiche axiale Dicke wie ein über den Umfang des Hohlrades 9 hinausragender Radialsteg 101, der hier als Hohlradträgererweiterung ausgeführt ist. Er bildet die innere Führung der beiden Bremskolben 16, 17, ohne daß dabei Reaktionskräfte auf den Hohlradträger 10 übertragen werden. Den Spreizkräften der Bremskolben 16, 17 entgegenwirkend sind mehrere Rückstellfedern 20 am Außenrand von den Bremskolben 16, 17 bremsenseitig vorgeordneten Druckscheiben 21, 22 eingehängt, wobei sie axial über den Bremszylinderring 19 hinweggreifen. Die Druckscheiben 21, 22 sind dabei in Drehrichtung festgehalten, jedoch axial verschieblich geführt durch je eine beidseits des Radialsteges 101 bzw. der Hohlradträgererweiterung angeordnete Außenverzahnung 23, 24 des Hohlrades 9. Je eine Endscheibe 25, 26 der jeweiligen Bremshälfte 14, 15 ist auf der Innenseite der jeweiligen Erweiterung 12, 13 des Radnabengehäuses 1 vorgesehen. Axial zwischen den Druck- und Endscheiben 21, 23 bzw. 22, 24 können je nach Bedarf ein oder mehrere Innen- und Außen-Bremsscheiben 26, 27 bzw. 29, 30 angeordnet sein. Sowohl die Endscheiben 25, 26 als auch die Außen-Bremsscheiben 29, 30 sind dabei in Innenverzahnungen 31, 32 des Mantels des Radnabengehäuses 1 drehfest gehalten und begrenzt axial beweglich geführt. Diese Innenverzahnungen 31, 32 können aus relativ wenigen Rippen 33 am Umfang bestehen, welche axial in einen radial über den Bremshälften 14, 15 vorgesehenen Ölfangringraum 34 hineinragen und dort im Zusammenwirken mit den nicht drehenden Innenlamellen 26, 27 beim Bremsen eine günstige Ölabschöpfung in die Zwischenräume der Bremsscheiben hinein ermöglichen. Am Innenrand der Bremsscheiben 25 ... 30 bei Langsamfahrt oder Stillstand austretendes Öl kann über einige am Umfang des Hohlrades 9 in deren Außenverzahnungen 23, 24 vorgesehene Ölverteilungbohrungen 33, 34 in Richtung der Planetenräder 5 bzw. eines das Radnabengehäuse 1 radial unter dem achsseitigen Stirnflansch 13 abstützenden Axiallagers 35 weitergeführt werden. Die Wärmeabfuhr aus dem Radnabengehäuse 1 wird begünstigt bei Anbringung von Rippen 131, welche gleichzeitig zu deren Versteifung beitragen, auf der Außenseite der Stirnflansche 12 bzw. 13. Durch zwischen Hohlrad 9 und den jeweiligen Innenflächen der Stirnflansche 12, 13 vorgesehene Abdichtungen 91, 92 vor Getriebe 4, 5, 6 bzw. Axiallager 35 kann warmes Öl und Bremsenschmutz von den Zahnrädern bzw. Lagern ferngehalten und dort evtl. Fettschmierung vorgesehen werden. Im Bremsenbereich kann dann besonders dünnflüssiges Öl verwendet werden, um die Schleppmomente durch die Schmierfilme zwischen den gelösten Bremsscheiben zu vermeiden bzw. zu reduzieren.

Im Beispiel ist der Hohlradträger 10 auf eine Außenverzahnung 36 am getriebeseitigen Ende des Achsgehäuses 11 aufgeschoben und dort mittels einer Nutmutter 37 gegen das Axiallager 35 gepreßt. Hierbei ist ein vorzugsweise durch O-Ringe um die Achsgehäuseerweiterung abzudichtender radialer Übertritt 38 der Bremsdruckleitung 18 aus dem Achsgehäuse 11 vorgesehen.

Eine weitere, bei der erfindungsgemäßen Gehäusebauart anwendbare Möglichkeit der Befestigung des Hohlradträgers 10 besteht noch darin, gemäß einer Ausführung beim Stand der Technik für seinen Nabenbund 10 eine Innen-/Außenverzahnung vorzusehen und diese in eine Innenverzahnung des Achsgehäuses 11 einzuschieben, wobei der Hohlradträger 10 im Achsgehäuse 11 exakt zentriert und in Drehrichtung festgehalten ist. Seine Axialfixierung kann je nach Ausführung entweder, wie gezeichnet, mit einem mit der Achswelle 8 in Eingriff stehenden Sicherungsring 39 oder, wie hier nicht gezeichnet, mittels Kopfschrauben durch die getriebeseitige Stirnfläche des Hohlradträgers 10 bis in das Achsgehäuse 11 hinein und bei einfachem dichtbarem axialen Übertritt der Leitung 18 erfolgen. Die Bremshälften 14, 15 sind dabei von außen ohne Demontage des Axiallagers 35 und ohne Aufbocken des Fahrzeuges gemäß der zweiten Alternative vollständiger und einfacher zugänglich als mit einer rückwärtigen Gehäuseflanschverschraubung 40 gemäß der Zeichnung, weil im gezeigten Beispiel der radabgewandte Ringbund des Hohlradträgers 10 bis unter das Axiallager 35 geschoben werden muß, was beim Demontieren auch die Rad-Demontage erforderlich macht.

Das Achsgehäuse 11 ist bei beiden Befestigungsarten des Hohlradträgers 10 auf der bremsenabgewandten Seite des Axiallagers 35 als eine oben und unten in Lenkbolzenhalterungen 41, 42 auslaufende Abschlußplatte mit Lager- und Wellendichtungen 43, 44 so gestaltet, daß die Lenkachse 0₁ mit einem kürzest möglichen Abstand L bei der etwa durch die Mitte des Axiallagers 35 verlaufenden Radmittenebene M zu liegen kommt. Damit wird ein für enge Wendekreise usw. wichtiger, kleiner Lenkrollradius erzielt, welcher erfindungsgemäß auch mit einer nassen Bremse in der Radnabe gleich groß sein kann wie bei einer entsprechenden bremsenlosen Radnabengehäuse-Ausführung 1A gemäß Fig. 2.

Für eine solche bremsenlose Ausführung können mit Ausnahme des Hohlradträgers 10 bzw. 10A alle Teile identisch und die entsprechenden Gehäuse mit gleichen axialen Baulängen eingesetzt werden, so daß sich wegen gleicher Lenkgeometrien auch gleiche Lenkeinrichtungen bei gebremsten und ungebremsten Fahrzeugachsen einsetzen lassen. Auch die Anbringung einer Anlagefläche für den Felgenflansch 2 ist an sich beliebig entweder mittels Stehbolzen 45 außen vor dem frontseitigen Stirnflansch 12 oder außen auf dem Umfang des Radnabengehäuses 1. Im letzteren Falle können gleiche Abmessungen für den Felgenflansch 2 sowohl für gebremste als auch ungebremste Radgetriebe vorgesehen werden.

Zwischen den Bremskolben 16, 17 lassen sich auf an sich bekannte Weise auch problemlos Nachstellvorrichtungen zur Sicherstellung stets konstanter Bremslüftspiele einbauen.

Die Erfindung ist auch realisiert, wenn statt der im Beispiel gezeigten frei vorkragenden Planetenradbolzen 4 solche angewendet werden, die eine zweite Abstützung über einen gehäusefesten inneren Lagerkranz axial zwischen Getriebe 4, 5, 6 und dem Ende des Achsgehäuses 11 unter Inkaufnahme einer gewissen Baulängenvergrößerung des gesamten Radnabengehäuses 1 vorgesehen wird.

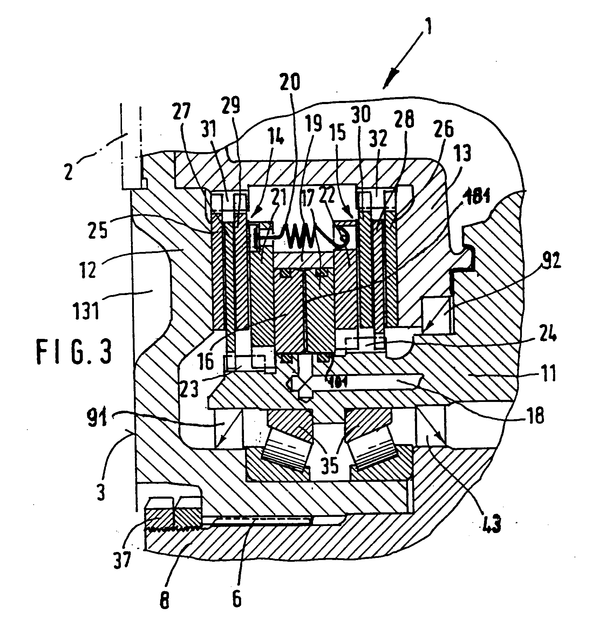

In Fig. 3 ist noch ein getriebeloses Radnabengehäuse 1 dargestellt, bei dem nach gleichem Grundprinzip gestaltete und angeordnete, in Öl laufende Scheibenbremsen 14, 15 vorgesehen sind. Der einzige wesentliche Unterschied gegenüber Fig. 1 und 2 liegt darin, daß die Achswelle direkt mit der Frontscheibe 3 formschlüssig verbunden ist. Der Einsatz solcher getriebeloser Radköpfe ist insbesondere bei leichten bzw. häufig zu bremsenden Fahrzeugen vorteilhaft, bei denen offene Bremsen durch Nässe oder Verschmutzung stärker gefährdet werden bzw. Bremsenabrieb nicht ins Freie gelangen soll. Der axiale Bauraumbedarf für einen getriebelosen Radkopf kann allerdings, wie in Fig. 3 gezeigt, dadurch noch weiter verringert werden, daß die Formschlußverbindung 6 zum Antrieb der Naben-Frontfläche 3 hier etwa radial unter dem Radlager 35 angeordnet wird. Der radseitig vorkragende Ringbund des Achsgehäuses 11 kann hier selbst die Funktion der inneren Wand des Bremszylinders 181 und den Druckkanal 18, 33 übernehmen, welche in den Versionen nach Fig. 1 der Radialsteg 101 hat, der dort als lösbarer Hohlradträger 10 des Getriebes dient und größere Bremsscheibendurchmesser bedingt.

Sollte Wert gelegt werden, auch bei getriebelosem Radkopf entsprechend große Bremsflächen einzusetzen, so kann auch dabei mittels eines größeren Radialsteges 101 entsprechend Fig. 1 eine Vergrößerung der Lamellenträger erreicht werden.

### Bezugszeichen

- 1: Radnabengehäuse mit Bremse
- 1A: Radnabengehäuse ohne Bremse
- 2: Felgenflansch frontseitig
- 2A: Felgenflansch umfangseitig
- 3: Frontplatte
- 4: Planetenbolzen
- 5: Planetenräder
- 6: Formschlußverbindung für Sonnenrad bzw. Frontplatte
- 7: Achsgelenk
- 8: Achswelle
- 81: Nabenhülse
- 82: Gelenkgabelkopf
- 9: Hohlrad
- 91: Getriebeabdichtung
- 92: Lagerabdichtung
- 10: Hohlradträger mit Bremse
- 10A: Hohlradträger ohne Bremse
- 101: Radialsteg
- 11: Achsgehäuse
- 12: Stirnflansch frontseitig
- 13: Stirnflansch achsgehäuseseitig
- 131: Rippen
- 14: Bremshälfte frontseitig
- 15: Bremshälfte achsgehäuseseitig
- 16: Bremskolben frontseitig
- 17: Bremskolben achsgehäuseseitig
- 18: Bremsleitung
- 181: Bremszylinder
- 19: Zylinderring
- 20: Rückstellfedern
- 21: Druckscheibe frontseitig
- 22: Druckscheibe achsgehäuseseitig
- 23: Außenverzahnung frontseitig
- 24: Außenverzahnung achsgehäuseseitig
- 25: Endscheibe frontseitig
- 26: Endscheibe achsgehäuseseitig
- 27: Innenbremsscheibe frontseitig
- 28: Innenbremsscheibe achsgehäuseseitig
- 29: Außenbremsscheibe frontseitig
- 30: Außenbremsscheibe achsgehäuseseitig
- 31: Innenverzahnung frontseitig
- 32: Innenverzahnung achsgehäuseseitig
- 33: Ölverteilungsbohrungen frontseitig
- 34: Ölverteilungsbohrungen achsgehäuseseitig
- 35: Radlager
- 36: Außenverzahnung von 11
- 37: Nutmutter
- 38: Überdruck der Bremsdruckleitung 18 aus 11 in 10
- 39: Sicherungsring für 8
- 40: Gehäuseflanschverschraubung
- 41: Lenkbolzenhalterung oben
- 42: Lenkbolzenhalterung unten
- 43: Achslagerdichtung
- 44: Achswellendichtung
- 45: Flanschbolzen frontseitig
- 45A: Flanschbolzen umfangseitig

## Patentansprüche

1. Radkopf für in Öl laufende Scheibenbremsen (25 ... 30),
- mit einem am radseitigen Ende eines Achsgehäuses (11) angeordneten Radlager (35),
- auf dem ein mit einem Felgenflansch (2) bzw. (2A) verschraubbares, etwa zylindrisches Radnabengehäuse (1 bzw. 1A) abgestützt und drehbar geführt ist,
- wobei innerhalb des Radnabengehäuses (1) axial zwischen dessen Stirnflanschen (12, 13) zueinander relativ verschiebliche und mit Drehzahldifferenzen umlaufende bzw. festgehaltene und mittels eines zum Achsgehäuse (11) verschieblichen Bremskolbens (16 bzw. 17) in Reibschluß bringbare Bremsscheiben (25 ... 30) einbaubar sind,
dadurch **gekennzeichnet,**
- daß zwei Bremskolben (16, 17) vorgesehen sind, welche durch eine über einen Radialsteg (101) des Achsgehäuses (11) herbeigeführte Bremsdruckleitung (18) in entgegengesetzte Richtungen auseinanderspreizbar sind,
- wobei mindestens je eine axial zwischen dem Radialsteg (101) und den Stirnflanschen (12, 13) des Radnabengehäuses (1) drehfest gehalterte Bremsscheibe (27 ... 28) an die Innenflächen der Stirnflansche (12, 13) bzw. diesen vorgeordnete mitdrehende Endscheiben (25, 26) angepreßt werden.

2. Radkopf nach Anspruch 1, dadurch **gekennzeichnet,**
- daß axial zwischen den beiden Bremskolben (16, 17) ein gemeinsamer Bremsdruck-Ringzylinder (181) vorgesehen ist,
- welcher radial innerhalb eines nur von den Kolben (16, 17) radial geführten Zylinderringes (19) gebildet ist.

3. Radkopf nach Anspruch 1, dadurch **gekennzeichnet,** daß der Radialsteg (101) unter Mitabdichtung einer von dort in ihn übertretenden Bremsdruckleitung (18) am Achsgehäuse (11) angeflanscht ist.

4. Radkopf nach Anspruch 3, dadurch **gekennzeichnet,** daß der Radialsteg (101) an seinen den Stirnflanschen (12, 13) zugewandten Seitenflächen Lamellenträger (23, 24) für Innenbremsscheiben bzw. Druck- und Endscheiben (21, 22, 31, 32) hat.

5. Radkopf nach Anspruch 4, dadurch **gekennzeichnet,** daß die Stirnflansche (12, 13) des Radnabengehäuses (1) radial außerhalb der auf dem Radlager (35) laufenden Nabe des achsgehäuseseitigen Stirnflansches (13) um mehr als die radiale Höhe der Ringflächen der Bremsscheiben (25 ... 30) über den Außendurchmesser der Innenlamellenträger (23, 24) hinausgehen.

6. Radkopf nach Anspruch 1, dadurch **gekennzeichnet,**
- daß eine das Radlager (35) durchdringende Achswelle (8) vorgesehen ist,
- die an ihrem aus dem Achsgehäuse (11) in das Radnabengehäuse (1 bzw. 1A) eintauchenden freien Ende eine lösbare Formschlußverbindung (6) mit der außen in den frontseitigen Stirnflansch (12) übergehenden Frontplatte des Radnabengehäuses (1 bzw. 1A) aufweist,
- wobei die Formschlußverbindung (6) vom frontseitigen Bremsscheibenpaket (25, 27, 29) etwa radial überdeckt ist.

7. Radkopf nach Anspruch 1, dadurch **gekennzeichnet,**
- daß der Radialsteg (101) Hohlradträger (10) eines von der Achswelle (8) als Sonnenwelle angetriebenen Planetenrädersatzes (5) ist,
- dessen Planetenbolzen (4) auf der Innenseite des frontseitigen Stirnflansches (12) bzw. der Frontplatte (3) angebracht sind,
- und dessen Hohlrad (9) von den frontseitigen Bremsscheiben (25, 27, 29) außen umfaßt ist.

8. Radkopf nach Anspruch 1, dadurch **gekennzeichnet,** daß die Innenbremsscheiben (27, 28) auf Außenverzahnungen (23, 24) des Hohlrades (9) und die Außenbremsscheiben (25, 29 bzw. 26, 30) der Bremshälften in Innenverzahnungen (30, 31) am Mantel des Radnabengehäuses (1) beidseits einer zum Radialsteg (101) gehörenden radialen Hohlradträgererweiterung geführt sind.

9. Radkopf nach Anspruch 1, dadurch **gekennzeichnet,** daß mindestens der achsgehäuseseitige Stirnflansch (13) auf seiner Außenseite mit Oberflächenvergrößerungen (Rippen (131)) zur Kühlungsverbesserung versehen ist.

10. Radkopf nach Anspruch 1, dadurch **gekennzeichnet,** daß der frontseitige Stirnflansch (12) auf seiner Außenseite zur Befestigung eines Felgenflansches (2) mit Flanschbolzen (45) im Bereich der Bremsscheiben (25, 27, 29) ausgestattet ist.

11. Radkopf nach Anspruch 1, dadurch **gekennzeichnet,**
- daß zwischen dem Kolben (16, 17) und den kolbenseitigen nächstgelegenen Außenbremsscheiben (29, 30) je eine im Hohlrad (9) geführte Druckscheibe (21, 22) liegt,
- die mittels an ihrem Außenumfang eingehakter Rückzugfedern (20) entgegen der Arbeitsrichtung der Kolben (16, 17) zueinander herangezogen werden.

12. Radkopf nach Anspruch 1, dadurch **gekennzeichnet,** daß der frontseitige Stirnflansch (12) zusammen mit dem Mantel des Radnabengehäuses (1) durch eine Flanschverbindung (40) am Außenrand des seinerseits auf dem Achsgehäuse (11) angeordneten Axiallagers (35) gehalten ist.

13. Radkopf nach Anspruch 1, dadurch **gekennzeichnet,** daß im Bereich radial innerhalb der Lamellenträger (23, 24) radiale Ölverteilungsbohrungen (32, 34) vorgesehen sind.

14. Radkopf nach Anspruch 1, dadurch **gekennzeichnet,** daß durch Abdichtungen (91, 92) zwischen dem Mantel des Hohlrades (9) und den Innenflächen der Stirnflansche (12, 13) beidseitig der Außenverzahnungen (23, 24) getrennte Ölräume für den Bremsenbereich einerseits (25 ... 30) sowie das Lager (35) andererseits vorgesehen sind.

15. Radkopf nach Anspruch 1, dadurch **gekennzeichnet,** daß der achsgehäuseseitige Stirnflansch (13) das Axiallager (35) auf dem Achsgehäuse (11) etwa axial überdeckt.

16. Radkopf nach Anspruch 1, dadurch **gekennzeichnet,** daß die axiale Baulänge und die Verbindungsabmessung des Achsgehäuses (11) mit der Achswelle (8) sowie der Befestigung des Hohlradträgers (10) auf dem Achsgehäuse (11) und auch die Abmessungen der Planetenräder (5) einen Austausch mit einem bremsenlos ausgeführten Radgetriebegehäuse (1) gleichen Lenkradius (L) ermöglichen.

17. Radkopf nach Anspruch 16, dadurch **gekennzeichnet,** daß die Achswelle (8) einer sie innerhalb des Achsgehäuses (11) umfassenden Nabenhülse (81) eines Gelenkgabelkopfes (82) axial einstückig und ihr das Sonnenrad frontseitig unmittelbar selbst angeformt ist.

18. Radkopf nach Anspruch 17, dadurch **gekennzeichnet,** daß die Achswelle (8) im Bereich des Achsgehäuses (11) von einer mit ihr lösbar aber drehfest verbundenen Nabenhülse (81) eines die Lenkzapfenlager (41, 42) durchdringenden Wellengelenk-Gabelkopfes (82) umschlossen ist.

## Claims

1. Wheel head for oil-lubricated disc brakes (20 ... 30),
- with a wheel bearing (35) fitted at the end of an axle housing (11) nearer the wheel,
- on which a wheel hub housing, such as a cylindrical wheel hub housing (1 or 1A) which can be screwed onto a rim flange (2) or (2A), is supported and rotatably guided,
- whereby brake discs (25 ... 30) can be axially installed inside the wheel hub housing (1) between the front flanges (12, 13) of the wheel hub housing (1), and whereby the brake discs (25 ... 30) can be moved in relation to each other and rotate or remain fixed at different speeds and moved into a friction engagement using a brake piston (16 or 17) which can be moved in relation to the axle housing (11),
**characterized** in that,
- two brake pistons (16, 17) are provided which can be spread apart in opposite directions by means of a brake pressure line (18) fed in through a radial bar (101) of the axle housing (11),
- whereby at least one brake disc (27 ... 28) each held between the radial bar (101) and the front flanges (12, 13) of the wheel hub housing (1) in such a way as to prevent rotation is pressed against the inner surfaces of the front flange (12, 13) or against end discs (25, 26) fitted in front of and rotating with the inner surfaces of the front flange (12, 13).

2. Wheel head according to claim 1,
**characterized** in that,
- a shared brake pressure ring cylinder (181) is provided axially between the two brake pistons (16, 17),
- which is formed radially within a cylinder ring (19) which is radially guided only by the pistons (16, 17).

3. Wheel head according to claim 1,
**characterized** in that , the radial bar (101) is flange-mounted on the axle housing (11) and also seals a brake pressure line (18) which emerges into the radial bar (101) from the axle housing (11).

4. Wheel head according to claim 3,
**characterized** in that the radial bar (101) has disc carriers (23, 24) for internal brake discs or thrust and discs (21, 22, 31, 32) on the lateral surfaces of the radial bar (101) which face towards the front flanges (12, 13).

5. Wheel head according to claim 4,
**characterized** in that the front flanges (12, 13) of the wheel hub housing (1) protrude radially from the hub of the front flange (13) on the axle housing side which runs on the wheel bearing (35) by more than the radial height of the ring surfaces of the brake discs (25 ... 30) above the external diameter of the internal disc carriers (23, 24).

6. Wheel head according to claim 1,
**characterized** in that
- an axle shaft (8) which passes through the wheel bearing (35) is provided,
- which at its free end which protrudes from the axle housing (11) into the wheel hub housing (1 or 1A) demonstrates a releasable shape-locking connection (6) with the front plate of the wheel hub housing (1 or 1A) which protrudes outwardly into the front face of the front flange (12),
- whereby the shape-locking connection (6) is covered by the front brake disc pack (25, 27, 29), for example radially.

7. Wheel head according to claim 1,
**characterized** in that ,
- the radial bar (101) is the ring gear carrier (10) of a planetary gear train (5) which is driven by the axle shaft (8) with the axle shaft (8) acting as the sun gear,
- the planet gear pins (4) of the planetary gear train (5) are fitted on inner side of the frontally mounted front flange (12) or on the inner side of the front plate (3),
- and the ring gear (9) of the planetary gear train (5) is externally enclosed by the front brake discs (25, 27, 29).

8. Wheel head according to claim 1,
**characterized** in that the inner brake discs (27, 28) are mounted on the outer splines (23, 24) of the ring gear (9) and the outer brake discs (25, 29, or 26, 30) of the brake halves are mounted in internal splines (30, 31) on the casing of the wheel hub housing (1) on both sides of a radial ring carrier extension of the radial bar (101).

9. Wheel head according to claim 1,
**characterized** in that, the front flange (13) on the axle housing side at least is provided with surface elongations (ribs (131)) on its outside in order to improve cooling characteristics.

10. Wheel head according to claim 1,
**characterized** in that , the frontally mounted front flange (12) is fitted with flange bolts (45) in the area of the brake discs (25, 27, 29) on its outside in order to attach a rim flange (2).

11. Wheel head according to claim 1,
**characterized** in that,
- one pressure disc (21, 22) each in the ring gear (9) is mounted between the piston (16, 17) and the nearest external brake discs (29, 30) on the piston side,
- which are pulled towards each other against the operating direction of the pistons (16, 17) by means of retractile springs (20) hooked into the external diameter of the pressure discs (21, 22).

12. Wheel head according to claim 1,
**characterized** in that, the frontally mounted front flange (12) together with the cover of the wheel hub housing (1) are held against the external edge of the axial bearing (35) which is fitted to the axle housing (11) by means of a flange connection (40).

13. Wheel head according to claim 1,
**characterized** in that, radial oil distribution bores (32, 34) are provided in the area within the radius of the disc carriers (23, 24).

14. Wheel head according to claim 1,
**characterized** in that, separate oil chambers are provided for the braking area (25 ... 30) on the one hand and the bearing (35) on the other by means of seal elements (91, 92) between the cover of the ring gear (9) and the internal surfaces of the front flanges (12, 13) on either side of the external splines (23, 24).

15. Wheel head according to claim 1,
**characterized** in that, the front flange (13) on the axle housing side covers the axial bearing (11) on the axle housing (11), for example axially.

16. Wheel head according to claim 1,
**characterized** in that, the axial construction length and the connection dimensions of the axle housing (11) with the axle shaft (8) as well as the fixing method of the ring gear carrier (10) on the axle housing (11) and also the dimensions of the planet gears (5) enable these items to be exchanged for a non-braking wheel drive housing (1) with the same sterring radius (L).

17. Wheel head according to claim 16,
**characterized** in that, the axle shaft (8) is formed onto a hub sleeve (81) of a joint fork head (82) which encloses the axle shaft (8) in one axial section inside the axle housing (11) and that the sun gear is directly formed onto the front surface of the axle shaft (8) itself.

18. Wheel head according to claim 16,
**characterized** in that, the axle shaft (8) in the area of the axle housing (11) is enclosed by a hub sleeve (81) of the shaft joint fork head (82) which is connected to the axle housing (8) by means of a releasable but torsionally rigid joint, whereby the hub sleeve (81) protrudes through the steering pivot bearings (41, 42).

## Revendications

1. Moyeu de roue pour freins à disques (25 ... 30) tournant dans de l'huile,
- comportant un roulement de roue (35) disposé à une extrémité d'un carter d'essieu (11) du côté de la roue
- et sur lequel un carter de moyeu (1, 1A) sensiblement cylindrique, susceptible d'être boulonné à une joue de jante (2, 2A), est supporté et guidé de manière rotative,
- des disques de frein (25 ... 30) étant montés à l'intérieur du carter de moyeu (1) de manière à pouvoir coulisser axialement l'un par rapport à l'autre entre des parois latérales (12, 13) de ce carter et tourner à des vitesses différentes ou être bloqués, les disques de frein pouvant être mis en friction mutuelle au moyen d'un piston de frein (16, 17) coulissant par rapport au carter d'essieu (11,)
**caractérisé** en ce que :
- il est prévu deux pistons de frein (16, 17), agencés pour s'écarter l'un de l'autre dans des sens opposés grâce à un conduit de pression de freinage (18) passant dans un collet radial (101) du carter d'essieu (11), et
- au moins un disque de frein non rotatif (27 ... 28) situé axialement entre ledit collet radial (101) et les parois latérales (12, 13) du carter de moyeu (1) et poussé par la pression contre la surface intérieure de la paroi latérale correspondante (12, 13) ou contre un disque terminal (25, 26) tournant avec cette paroi.

2. Moyeu de roue selon la revendication 1, **caractérisé** en ce que :
- il est prévu un cylindre de frein annulaire commun (181) entre les deux pistons de frein (16, 17) et
- ce cylindre est formé radialement à l'intérieur d'un anneau de cylindre (19) occupé radialement uniquement par les pistons (16, 17).

3. Moyeu de roue selon la revendication 1, **caractérisé** en ce que le collet radial (101) est fixé au carter d'essieu (11) d'une manière assurant l'étanchéité d'un conduit de pression de freinage (18) passant du carter au collet.

4. Moyeu de roue selon la revendication 3, **caractérisé** en ce que le collet radial (101) comporte sur ses surfaces latérales, du côté des parois latérales (12, 13), des porte-disques (23, 24) pour des disques intérieurs de frein, notamment des disques de poussée et des disques terminaux 21, 22, 31, 32).

5. Moyeu de roue selon la revendication 4, **caractérisé** en ce que les parois latérales (12, 13) du carter de moyeu (1) s'étendent radialement à l'extérieur du moyeu de la paroi latérale (13) du côté de l'essieu, ce moyeu tournant sur le roulement de roue (35), dans une mesure plus grande que la hauteur radiale des surfaces annulaires des disques de frein (25 ... 30) au-delà du diamètre extérieur des porte-disques intérieurs (23, 24).

6. Moyeu de roue selon la revendication 1, **caractérisé** en ce que :
- il est prévu un arbre d'essieu (8) qui traverse le roulement de roue (35)
- et qui comporte, à son extrémité libre émergeant du carter d'essieu (11) dans le carter de moyeu (1, 1A), un accouplement positif démontable (6) avec la plaque frontale du carter de moyeu (1, 1A) qui se continue vers l'extérieur sous la forme de la paroi latérale (12) du côté frontal,
- ledit accouplement positif (6) étant recouvert sensiblement radialement par le paquet de disques de frein (25, 27, 29) du côté frontal.

7. Moyeu de roue selon la revendication 1, **caractérisé** en ce que :
- le collet radial (101) constitue un porte-couronne (10) pour une couronne à denture intérieure d'un train planétaire (5) entraîné par l'arbre d'essieu (8) servant lui-même de pignon planétaire,
- les axes de satellites (4) du train planétaire sont disposés sur la face intérieure de la paroi latérale du côté frontal (12) ou de la plaque frontale (3),
- et ladite couronne (9) est entourée extérieurement par les disques de frein (25, 27, 29) du côté frontal.

8. Moyeu de roue selon la revendication 1, **caractérisé** en ce que les disques intérieurs de frein (27, 28) sont montés sur des dentures extérieures (23, 24) de la couronne à denture intérieure (9) et les disques extérieurs de frein (25, 29 et 26, 30) des moitiés du frein sont montés dans des dentures intérieures (30, 31) ménagées sur la périphérie du carter de moyeu (1), de part et d'autre d'un élargissement radial du porte-couronne, faisant partie du collet radial (101).

9. Moyeu de roue selon la revendication 1, **caractérisé** en ce qu'au moins la paroi latérale (13) du côté de l'essieu comporte, sur sa face extérieure, des formations superficielles (nervures 131) pour améliorer le refroidissement.

10. Moyeu de roue selon la revendication 1, **caractérisé** en ce que la paroi latérale (12) du côté frontal est équipée de boulons de roue (45) dans la zone des disques de frein (25, 27, 29), pour la fixation d'une joue de jante (2) sur sa face extérieure.

11. Moyeu de roue selon la revendication 1, **caractérisé** en ce que :
- un disque de poussée (21, 22) monté sur la couronne (9) est disposé entre chaque piston (16, 17) et le disque extérieur de frein (29, 30) le plus proche du piston, et
- les deux disques de poussée sont tirés l'un vers l'autre dans le sens opposé au sens de travail des pistons (16, 17) au moyen de ressorts de rappel (20) accrochés à leur périphérie.

12. Moyeu de roue selon la revendication 1, **caractérisé** en ce que la paroi latérale (12) du côté frontal, solidaire de la périphérie du carter de moyeu (1), est fixé par bridage (40) au bord extérieur du roulement axial (35), monté lui-même sur le carter d'essieu (11).

13. Moyeu de roue selon la revendication 1, **caractérisé** en ce que des alésages radiaux de distribution d'huile (32, 34) sont prévus dans la zone radiale intérieure des porte-disques (23, 24).

14. Moyeu de roue selon la revendication 1, **caractérisé** en ce que des joints d'étanchéité (91, 92) disposés entre la périphérie de la couronne (9) et les surfaces intérieures des parois latérales (12, 13), de part et d'autre des dentures extérieures (23, 24), définissent des chambres séparées pour l'huile, d'une part pour la zone du frein (25 ... 30) et d'autre part pour le roulement (35).

15. Moyeu de roue selon la revendication 1, **caractérisé** en ce que la paroi latérale (13) du côté du carter d'essieu recouvre axialement le roulement axial (35) monté sur le carter d'essieu (11).

16. Moyeu de roue selon la revendication 1, **caractérisé** en ce que la longueur axiale de construction et les dimensions du raccordement entre le carter d'essieu (11) et l'arbre d'essieu (8), ainsi que de la fixation du porte-couronne (10) sur le carter d'essieu (11) et les dimensions des pignons satellites (5) permettent un échange avec un carter (1) de réducteur de roue dépourvu de frein et ayant le même rayon de braquage (L).

17. Moyeu de roue selon la revendication 16, **caractérisé** en ce que l'arbre d'essieu (8) est solidaire axialement d'un moyeu tubulaire (81) d'une tête de fourche (82) d'un joint articulé, ce moyeu tubulaire l'entourant à l'intérieur du carter d'essieu (11) , et en ce que le pignon planétaire est ménagé directement sur l'arbre d'essieu lui-même du côté frontal.

18. Moyeu de roue selon la revendication 17, **caractérisé** en ce que l'arbre d'essieu (8), dans la zone du carter d'essieu (11), est entouré par un moyeu tubulaire (81) d'une tête de fourche (82) d'un joint d'articulation d'arbre qui franchit les pivots de direction (41, 42), le moyeu tubulaire étant fixé à l'arbre d'essieu de manière démontable, mais non rotative.
